# EUROPEAN PATENT APPLICATION

(11) **EP 4 807 482 A1**
(43) Date of publication of application: **16.09.2026**
(21) Application number: 26163903.3
(22) Date of filing: 11.03.2026
(51) Int. Cl.: G05D 1/242, G05D 1/622, G05D 1/667, G05D 1/697

(54) **SYSTEM AND METHOD FOR AUTOMATIC LOAD TRANSFER BETWEEN AUTOMATED GUIDED VEHICLES**

(30) Priority: 12.03.2025 US 202563770862 P; 20.11.2025 US 202563921775 P
(71) Applicant: JBT Marel Corporation, Chicago, IL 60606 (US)
(72) Inventor: BACCARA, Andrea, Chicago, 60606 (US); MONTGOMERY, Timothy Ray, Chicago, 60606 (US); DE OLIVEIRA, Luciano Gomes, Chicago, 60606 (US); GRIMALDI, Giorgio, Chicago, 60606 (US); ROGERS, Matthew J., Chicago, 60606 (US); BALSER, Joshua, Chicago, 60606 (US)
(74) Representative: Inspicos P/S

(57) **Abstract**

Systems and methods for automatic transfer of a load between a carrier automated guided vehicle (AGV) carrying the load and a receiver AGV. During the transfer process, the carrier AGV is positioned within proximity of the receiver AGV. A handshake is initiated between the AGV pair, causing one of the AGVs to become stationary. Portions of the bumper field of each AGV can be disabled to permit positioning of the AGVs close together without initiating obstacle avoidance maneuvers of the AGVs. During the handshake, while one AGV moves toward the other AGV, the respective bumper fields together form an enlarged bumper field surrounding at least a majority of a combined perimeter of the AGV pair, providing intact obstacle detection while transferring the load between AGVs. After the load is transferred, the handshake can be terminated and the receiver AGV can deliver the received load to a location within the warehouse.

## Description

### CROSS REFERENCES TO RELATED APPLICATIONS

This application claims the benefit of U.S. Provisional Application No. 63/921775, filed November 20, 2025, and U.S. Provisional Application No. 63/770862, filed March 12, 2025, both of which applications are incorporated herein by reference in their entireties.

### BACKGROUND

Automated vehicle material transportation, such as with automated guided vehicles (AGVs), autonomous mobile robots (AMRs), and laser guided vehicles (LGVs), and the like, referred to collectively herein as automated guided vehicles (AGVs), has become an integral part of modern warehouse operations, facilitating the efficient transport of goods between storage, processing, and shipping areas. Automated material transportation uses vehicles that rely on navigation technologies such as magnetic strips, light detection and ranging lasers (LiDAR), vision-based systems, and RFID to autonomously move through warehouse environments. Despite their benefits, the safe operation of AGVs in warehouses remains a critical concern. Warehouses are dynamic environments where AGVs must interact with human workers, forklifts, other mobile robots, and stationary infrastructure. Unexpected obstacles pose significant collision risk to AGVs, potentially leading to injury, equipment damage, and/or inventory loss. As AGVs become more prevalent in warehouse automation, ensuring their safe operation is essential for preventing accidents and maintaining workflow continuity.

Traditional safety measures for AGVs include obstacle detection sensors, emergency stop mechanisms, and pre-defined navigation paths. While these approaches provide a basic level of safety, they can struggle to handle rapidly changing complex warehouse conditions. For example, static pre-programmed routes may not account for dynamic or unmapped obstructions, and simple sensor-based obstacle avoidance may lead to inefficient detours or stoppages. Additionally, AGVs may fail to adequately communicate their movements to human workers, increasing the risk of accidental interference or collisions.

In addition to safety concerns, loading and unloading processes continue to present challenges to AGV operations that can limit overall system efficiency and throughput. Existing systems often face limitations in integrating the various components required for a seamless loading and unloading process. For example, conventional systems may not effectively coordinate the precise positioning of the AGV relative to an obstacle or target (dock, rack, fixture), leading to potential collisions or the need for additional corrective movements. Similarly, the absence of robust real-time monitoring and control mechanisms can hinder the ability of the system to adapt to dynamic conditions in the warehouse environment, such as variations in cargo dimensions, weight, or environmental obstacles.

### DESCRIPTION OF THE DRAWINGS

The foregoing aspects and many of the attendant advantages of the claimed subject matter will become more readily appreciated as the same become better understood by reference to the following detailed description, when taken in conjunction with the accompanying drawings, wherein:
FIGURES 1A and 1B show a flow chart of a method for automatic load transfer between automated guided vehicles, with a carrier automated guided vehicle transferring a load to a receiver automated guided vehicle, in accordance with embodiments of the present disclosure;
FIGURES 2A and 2B show a flow chart of a method for automatic load transfer between automated guided vehicles, with a receiver automated guided vehicle receiving a load from a carrier automated guided vehicle, in accordance with embodiments of the present disclosure;
FIGURES 3A-3C are schematic views of systems for implementing the method of FIGURES 1A and 1B, in accordance with embodiments of the present disclosure;
FIGURES 4A-4C are schematic views of systems for implementing the method of FIGURES 2A and 2B, in accordance with embodiments of the present disclosure;
FIGURES 5A-5C are schematic views of systems for implementing the method of FIGURES 2A and 2B, in accordance with embodiments of the present disclosure;
FIGURES 6A-6C are schematic views of systems for implementing the method of FIGURES 2A and 2B, in accordance with embodiments of the present disclosure; and
FIGURES 7A-7C are schematic views of systems for implementing the methods of FIGURES 1A and 1B and/or FIGURES 2A and 2B, where the receiver automated guided vehicle is configured to carry a pallet couple, in accordance with embodiments of the present disclosure.

### DETAILED DESCRIPTION

The detailed description set forth herein connection with the appended drawings, where like numerals reference like elements, are intended as a description of various embodiments of the present disclosure and are not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed.

As will be described in more detail below, the present disclosure provides examples of systems and methods for automatic load transfer between multiple automated guided vehicles ("AGVs"). As used herein, the terms "automated guided vehicle" and "AGV" are intended to refer to any automated or autonomous vehicle configured for material transportation, such as AGVs, autonomous mobile robots (AMRs), laser guided vehicles (LGVs), and the like, and accordingly are referred to collectively hereinafter as "AGVs," and the terms "load" and "load unit" are intended to refer to any payload transported by the AGVs, such as palletized goods, containers with integrated fork openings, and other payloads, including single pallet, pallet couples/tandems, etc. AGVs are used in warehouse operations to facilitate the efficient transport of goods between storage, processing, and shipping areas. In accordance with embodiments of the present disclosure, systems and methods of direct load transfer between AGVs reduces facility complexity, increases efficiency, and improves processing speed of warehouse operations. Various types of AGVs can be suitable for use with the systems and methods disclosed herein, including forklift AGVs (dual fork, quad fork, etc.), unit load AGVs, heavy load carrier AGVs, towing AGVs, and the like. In these embodiments, direct load transfer can be between two AGVs of the same type or of different types.

In some embodiments, a first type of AGV can be configured to pick up and transfer a load to a second type of AGV for further transport, processing, or for transfer to one or more subsequent AGVs. In an example with two direct transfers between three different AGVs, the first type of AGV can be capable of picking up a load from a high storage rack, the second type of AGV can be capable of high-speed transport between the warehouse and the loading area, and a third type of AGV can be capable of picking up the load from the second type of AGV and placing the load onto the transport container (truck trailer, box truck, rail car, etc.). In the embodiments disclosed herein, each AGV can be configured to either transfer the load to the subsequent AGV, or present the load in a condition for pick up by the subsequent AGV. In the foregoing example, the first AGV can pick up the load from a high storage rack (e.g., a forklift AGV) and deliver the load onto the second AGV (e.g., a unit load AGV by dropping the load onto a flat deck portion), which then transports the load at a relatively high-speed to the loading area, where the third AGV (e.g., another forklift AGV capable of entering a transport container) picks up the load from the second AGV and places the load in the desired position on the transport container. In some embodiments, the third AGV capable of entering the transport container is configured with two forks to carry a single load unit (e.g., one pallet), or configured with four forks to carry tandem load units (e.g., two pallets), as will be described in greater detail below. As used herein, a carrier AGV is in a loaded or partially loaded condition, and a receiver AGV is empty or partially loaded and designated to receive the load of the carrier AGV. In other embodiments, any system or method of load transfer between two or more AGVs is within the scope of the present disclosure, as will be described below.

In conventional warehouse operations, each load transfer occurs by placing the load on the floor or on fixed equipment for subsequent pick up by other AGVs or other warehouse equipment. For example, a forklift AGV capable of picking up a load from a high storage rack would then place the load onto a transfer rack, a conveyor, or a specified floor area at a fixed location in the warehouse. Once placement of the load is confirmed on the fixed transfer rack or floor area, a human-guided forklift or other transfer equipment transfers the load to an AGV that is capable of high-speed transport, which then must be unloaded at a loading area by another human-guided forklift or the like. In this regard, each transfer requires additional action, equipment, and/or human intervention when compared to the systems and methods of the present disclosure. These conventional operations are relatively inflexible from logistics and spatial placement standpoints, since fixed racks and transfer areas must be static for proper AGV operation, and require static layouts at facilities that may be evolving to adapt to different business requirements. In contrast, embodiments of the present disclosure permit greater flexibility in AGV operations by facilitating safe, direct transfer at any suitable location within the warehouse. In this regard, and using the foregoing example, if the first carrier forklift AGV capable of picking up a load from a high storage rack is operating in an area of the warehouse that is far away from a would-be location of the closest conventional fixed transfer rack, the second receiver AGV can instead travel at high-speed to intercept the first AGV at any suitable location where the load can be directly transferred. This configuration prevents excessive relatively slow travel by the first carrier AGV to the fixed rack location, and reduces idle time of the second receiver AGV waiting for delivery of the load by human intervention.

The safety system of AGVs typically includes sensors, such as light detection and ranging lasers (LiDAR), to detect objects around the AGV (e.g., a human, warehouse equipment, other AGV, unexpected foreign object, etc.). These sensors can form an envelope surrounding at least a portion of the perimeter of the AGV, with such an envelope referred to herein as a "bumper field." When an obstacle enters the bumper field of the AGV, the AGV can sense the obstacle and alter its path of travel or stop entirely until the obstacle is cleared. In addition, the AGV can transmit the presence of the obstacle to the central AGV fleet control system for further processing (e.g., to alert warehouse personnel). In embodiments of the present disclosure, direct load transfer between AGVs requires each AGV to enter the other AGV's bumper field, which would lead to safety system activation. To successfully complete the load transfer, the inter-transferring AGVs must at least partially disable their bumper field (e.g., by an AGV-to-AGV handshake authorization, as will be described below) to permit travel of the AGVs to close enough proximity. Since disabling the bumper field of any AGV during use exposes the AGV to impact with other objects, which can be particularly dangerous to warehouse personnel, embodiments of the present disclosure are configured to selectively disable portions of the bumper field of each AGV to form an enlarged safety bumper field using sensors on both AGVs during the handshake and subsequent positioning of the AGVs for the load transfer.

During the AGV-to-AGV handshake authorization, sensors on each AGV communicate with each other within a specified proximity. For example, as the AGVs approach a designation transfer location (e.g., determined by the AGV fleet control system), each AGV can activate its handshake system, including at least a transmitter and a receiver. The transmitter of the carrier AGV sends a signal to the receiver of the receiver AGV, and the transmitter of the receiver AGV sends a signal to the receiver of the carrier AGV. The signals can be analyzed by the handshake system of each AGV and/or the AGV fleet control system to provide a handshake authorization to perform further actions for the load transfer, e.g., disabling a portion of the bumper field of each AGV, confirming location of each AGV, moving one AGV toward the other AGV to a load transfer position, etc. Once the handshake is initiated, one of the AGVs may remain stationary while the other AGV maneuvers into position for the load transfer. For example, the receiver AGV can be stationary after initiation of the handshake and allow the carrier AGV to dynamically move into position for transferring the load, or vice versa. For safety and accuracy, the dynamic AGV can travel at slower speeds during the load transfer, e.g., at an engagement speed and/or at slower creep speed, each for improved stopping accuracy. Once both AGVs are in position, the load transfer is completed, and the AGVs break the handshake and travel to the next directed destination.

The handshake between the transferring AGVs can be initiated at a specified distance between the units. In some embodiments, once the AGVs receive instructions to transfer a load, the AGVs travel toward each other to a calculated meeting point or to a designated transfer location. Once the AGVs reach the specified distance apart from each other, the handshake system permits initiation. This specified distance is at least within a maximum handshake distance, which is specified in view of handshake system communication range, combined bumper field geometry, human entry risk, among other factors. During the handshake process, one or both of the AGVs can actively block further instruction signals from, e.g., the AGV fleet control system, until the handshake is complete.

Once the handshake between the transferring AGVs is initiated, the AGVs can form a combined bumper field geometry which is an enlarged safety bumper field using sensors on both AGVs to detect obstacles during the load transfer. On a single AGV, the bumper field can be directional, at least substantially surrounding the perimeter of the AGV to a designed sensing distance in each direction. The sensing distance of the bumper field can be any suitable distance, and in some embodiments can be based on the present speed (dynamic sensing distance) or speed capability (static sensing distance) of the AGV, e.g., a faster AGV may require a longer sensing distance to adequately stop and/or change course in reaction to an obstacle, the size of the load the AGV is currently carrying or is capable of carrying (one vs. two pallets, relative pallet orientation, etc.), among other considerations. After handshake initiation, movement of an AGV into the load transfer position will cause one side of each of the AGVs to be in near enough proximity to trigger the bumper field of the other AGV. As described above, a portion of the bumper field of each AGV can be disabled in a direction where other AGV will be positioned to complete the load transfer. For example, the front of the carrier AGV can be a transfer side in some configurations. Accordingly, the bumper field of this type of carrier AGV would disable the bumper field sensing toward the front direction. In other embodiments, any side of the AGVs can be the transfer/approach side and have selective disabling of the bumper field toward the transfer direction.

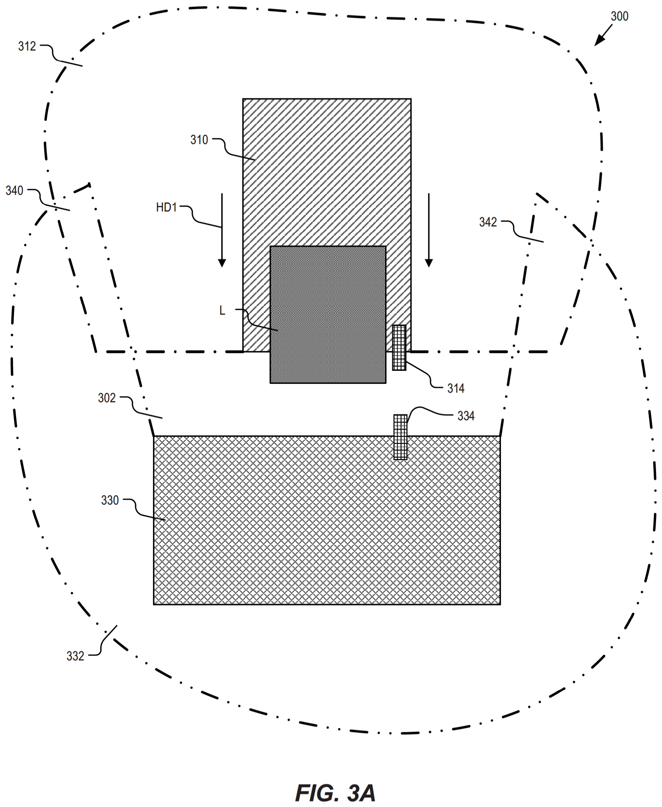

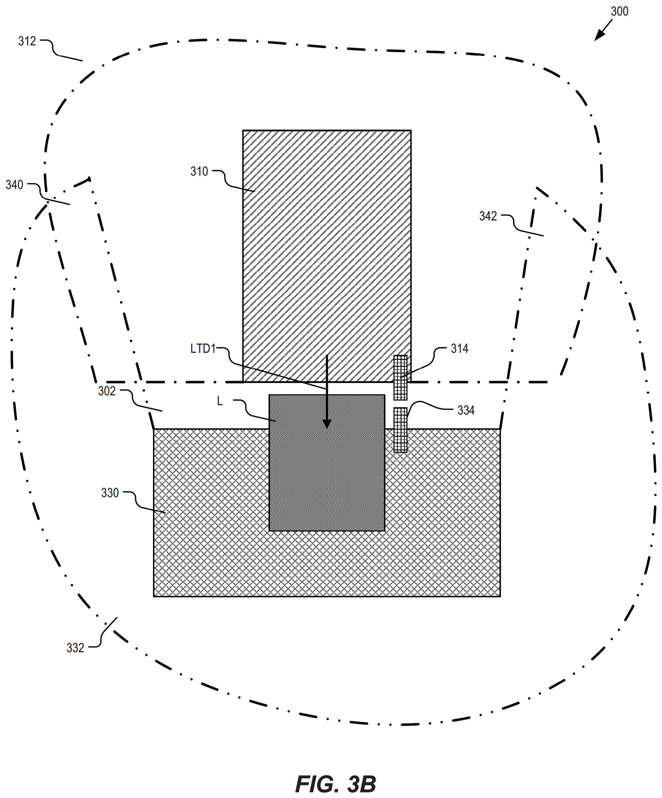

During the disabling of the bumper field on the transfer side of each AGV, at least some of the other directions of the bumper field can remain active to provide enlarged safety bumper field around the AGV pair during the handshake and subsequent load transfer. In some embodiments, the bumper fields of the AGV pair can overlap to create the enlarged bumper field. (See, e.g., FIGURES 3A and 3B, which will be described in greater detail below) surrounding at least a majority of a combined perimeter the carrier AGV and the receiver AGV. In an example where the front is the transfer direction of both AGVs, each AGV bumper field toward the rear, sides, and a lateral portion of the front can remain active during the handshake, such that foreign objects entering the enlarged bumper field would interrupt AGV motion to prevent damage or injury. In this example, if warehouse personnel approached the gap between the AGV pair during the handshake and positioning process, the side bumper field of one or both AGVs would sense the personnel and interrupt AGV motion, pausing the handshake until it is safe to continue. During the handshake and while the enlarged bumper field is active, presence of an obstacle in the stationary AGV bumper field can be communicated (e.g., through the handshake system of each AGV) to the dynamic AGV so that its movement can be stopped until the obstacle is clear of the enlarged bumper field.

In an example of a method in accordance with the present disclosure, the AGV fleet control system initiates a load transfer process between two AGVs by sending the AGVs to a designated node of the road system within the warehouse facility. Next, the fleet control system can require one of the AGVs (e.g., the carrier AGV) to initiate the load transfer. After initiation, the carrier AGV approaches the receiver AGV until a specified distance is reached (less than or equal to the maximum handshake distance). The handshake between the AGV pair can be initiated between the handshake systems of each AGV, causing one of the AGVs to remain stationary and block further requests from the fleet control system until the handshake is complete. Next, the carrier AGV can use a sensor to determine whether the receiver AGV is empty of a load. The carrier and receiver AGVs can then disable their respective bumper fields in the direction of the other AGV, creating the enlarged combined bumper field. Progressing through the transfer process, the dynamic AGV can move toward the stationary AGV to the transfer position at an engagement speed that is slower than, e.g., the transportation travel speed of the dynamic AGV. As the dynamic AGV approaches the transfer position, the AGV can further slow its travel speed to a creep speed for better stop accuracy. Once the dynamic AGV reaches the transfer position with respect to the static AGV, the load is transferred from the carrier AGV to the receiver AGV. Next the receiver AGV confirms whether load transfer to the fleet control system was successful, and the now empty carrier AGV moves away from the receiver AGV, e.g., reversing at the creep and/or engagement travel speeds. Once the empty carrier AGV is clear of the receiver AGV, such as at the maximum handshake distance, the handshake can be terminated between the AGV pair, and the carrier AGV can be engaged by the fleet control system for a subsequent task. Finally, the loaded receiver AGV transports the load to a load destination. A subsequent load transfer from the loaded receiver AGV to an unloading AGV, e.g., at the loading area, can follow a similar method with certain of the steps reversed, as will be described in more detail below.

Although embodiments of the present disclosure may be described with reference to systems and methods of automatic load transfer between an AGV pair, including the configurations shown in the FIGURES, one skilled in the relevant art will appreciate that the disclosed embodiments are illustrative in nature and therefore should not be construed as limited to such an application. It should therefore be apparent that the disclosed technologies and methodologies have wide application, and therefore may be suitable for use with many types of applications. Accordingly, the following descriptions and illustrations herein should not limit the scope of the claimed subject matter.

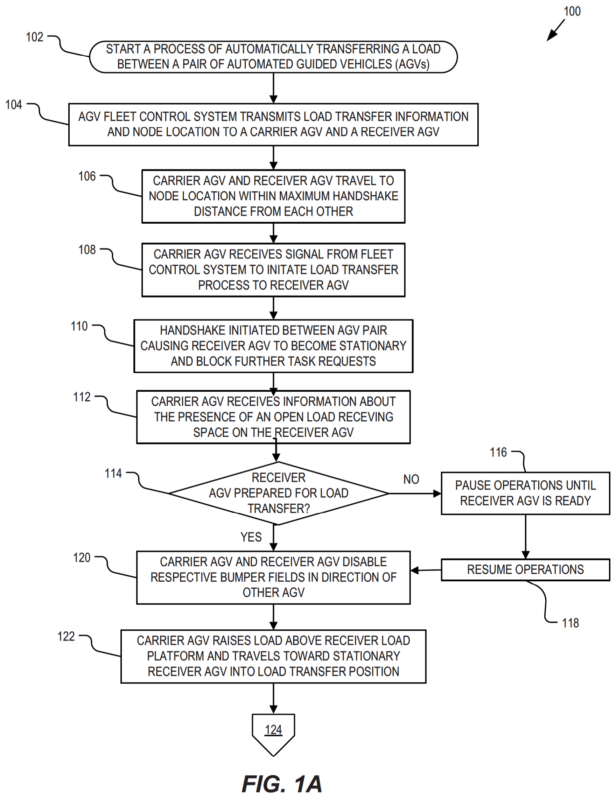

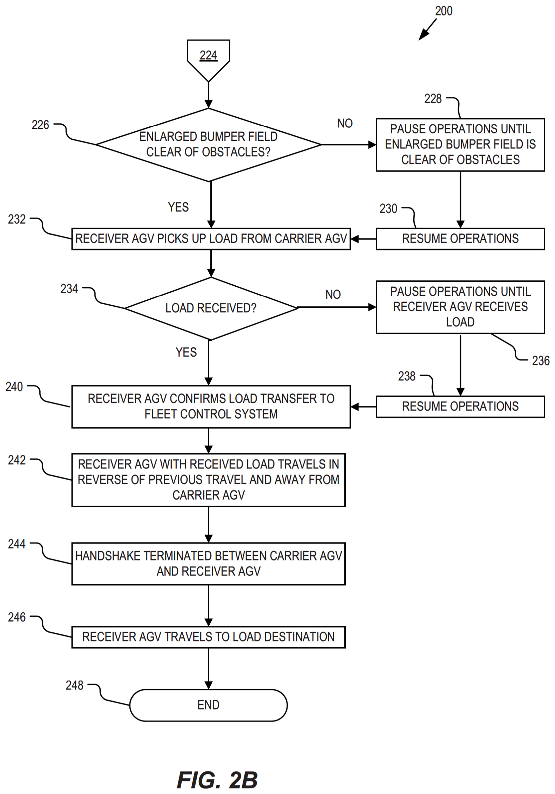

FIGURES 1A and 2B show a flow chart of a method 100 for automatic load transfer between a pair of AGVs, with a carrier AGV transferring a load to a receiver AGV, in accordance with embodiments of the present disclosure. Although the method 100 can be adapted for use with any automatic load transfer between a pair of similar or different AGVs, the steps of the method 100 are applicable to a carrier AGV that is configured to initiate a load transfer process, act as the dynamic AGV during the handshake, and transfer the load to the stationary receiver AGV. In an example of the method 100, the carrier AGV is a forklift type capable picking up the load from a storage rack (e.g., a high rack) and deliver the load, and the receiver AGV is a unit load type capable of receiving a load from the carrier (e.g., by dropping the load onto a flat deck portion), and then transporting the load at a relatively high-speed. However, other AGV configurations are also within the scope of the method 100.

From start block 102 in FIGURE 1A, the method 100 begins the process of automatically transferring a load between a pair of AGVs. At block 104, an AGV fleet control system transmits load transfer information and a node location of a road system in a warehouse facility to a carrier AGV and a receiver AGV. The node location can be a standard load transfer location or a logistic-driven location (e.g., a center point between the AGVs, a meeting point at full speed of both AGVs, etc.). Next, in block 106, the carrier AGV and the receiver AGV travel to the node location for the load transfer, and reach a position within a maximum handshake distance between the AGV pair.

Next, in block 108, the carrier AGV receives a signal from the fleet control system to initiate the load transfer process to the receiver AGV. Proceeding to block 110, a handshake is initiated between the AGV pair, which causes the receiver AGV to become stationary and block further task requests from the fleet control system during the handshake process. The blocking of further task requests by the stationary AGV (in this example, the receiver AGV) enforces safety by avoiding inadvertent movement of the stationary AGV with respect to the dynamic AGV during the process, which could result in impact, injury, and/or property damage. After handshake initiation, in block 112, the carrier AGV receives information related to the presence of a load on the receiver AGV to ensure it is either unloaded, or partially loaded with open receiving space for delivery of the currently transferring load. In this regard, the carrier AGV can use any suitable sensor to ensure the receiver AGV is empty or has an open load delivery receiving space before proceeding. In decision block 114, the carrier AGV determines whether the receiver AGV is prepared to receive the currently transferring load. If the receiver AGV is unexpectedly loaded without an open load delivery receiving space, in block 116, the method 100 is paused until the receiver AGV is determined to be ready to receive the currently transferring load and operation resumes in block 118.

Next, in block 120, the carrier AGV and receiver AGV disable their respective bumper fields at least in the direction toward the other AGV, creating the enlarged bumper field surrounding both AGVs. The disabling of the bumper fields permits the AGVs to move within a range of each other otherwise impermissible based on safety requirements. The close range within the bumper field is required for the transfer process. As shown in FIGURE 3A, discussed below, the enlarged bumper field can be a combination of the bumper field of the carrier and receiver AGVs, and may include some overlapping zones. Progressing to block 122, the carrier AGV raises the load above the receiver AGV load receiving portion (e.g., a flat deck portion) and moves toward the receiver AGV during the handshake to the load transfer position. In some embodiments, the movement of the carrier AGV after the handshake initiation can be slower than the standard travel speed of the carrier AGV, such that the control of the carrier AGV is enhanced in the close proximity to the receiver AGV. Additionally, the slower engagement speed can enhance the braking ability of the carrier AGV if an obstacle is detected in the enlarged bumper field. As the carrier AGV approaches the transfer position, the AGV can further slow its travel speed (e.g., to a creep speed) for further improved stopping accuracy.

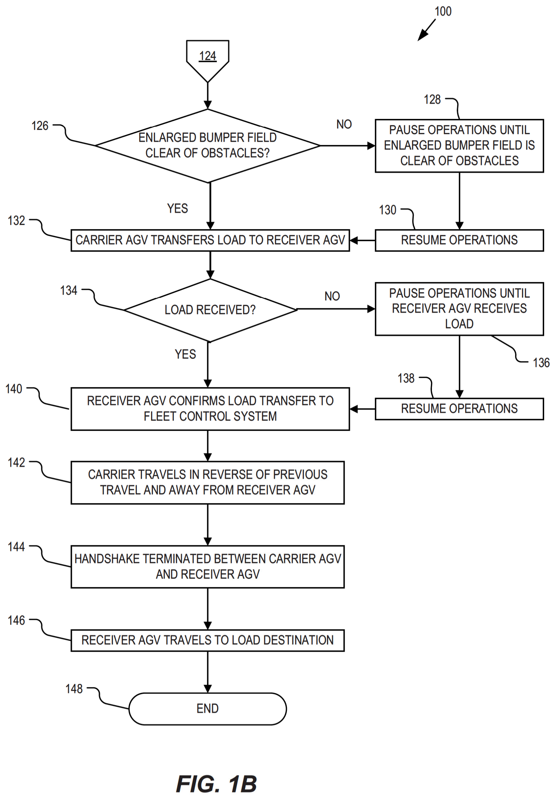

Turning to FIGURE 1B and continuing the method 100, as the carrier AGV moves toward the receiver AGV, in decision block 126, the AGV pair monitors obstacles entering the enlarged bumper field. If an obstacle is detected, in block 128, the method 100 is paused until the enlarged bumper field is clear of obstacles and operation resumes in block 130. If the enlarged bumper field remains clear of obstacles during the motion of the carrier AGV into the load transfer position, in block 132, the carrier AGV transfers the load to the receiver AGV. Next, in decision block 134, the receiver AGV determines whether the load has been received successfully. If the load has not been received successfully, the method 100 is paused until the receiver AGV is loaded and operation resumes in block 138.

Next, in block 140, the receiver AGV confirms the successful load transfer to the fleet control system, in block 142, the carrier AGV, now without a load, travels away from the receiver AGV, e.g., reversing at the creep and/or engagement travel speeds. Next, the handshake is terminated in block 144 once the carrier AGV is clear of the loaded receiver AGV. After termination of the handshake, in block 146, the receiver AGV transports the transferred load to the load destination (e.g., a loading area for transport vehicles or other destination), and the method 100 ends. Although the method 100 is shown with process steps in an order as an illustrated embodiment, some of the process steps can be performed in a different order, for example, the step of block 122 can be performed prior to the step of block 110, or at any stage during the steps therebetween.

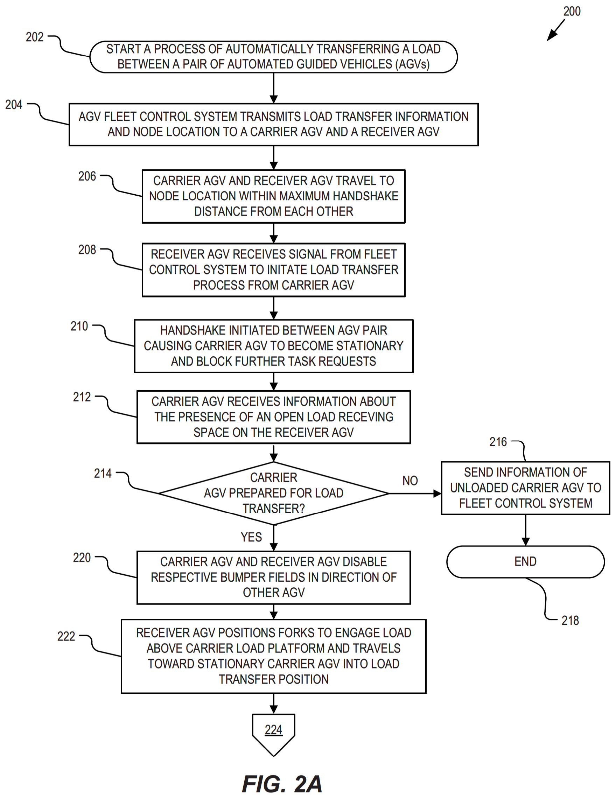

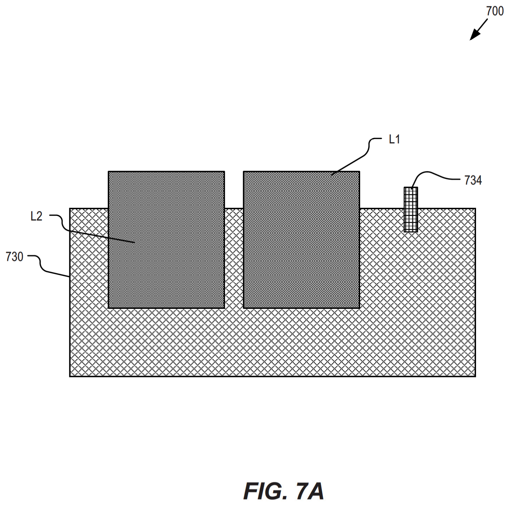

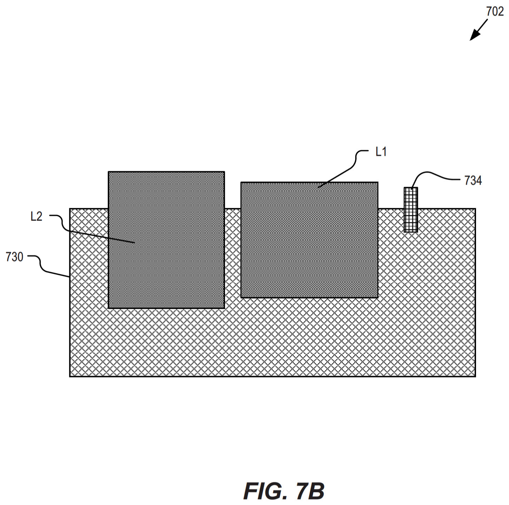

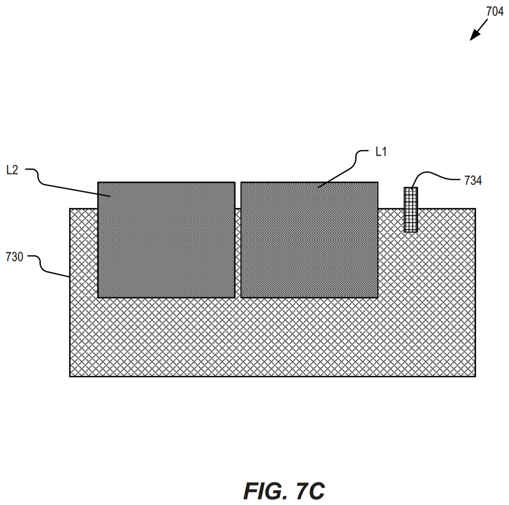

FIGURES 2A and 2B show a flow chart of a method 200 for automatic load transfer between a pair of AGVs, with a receiver AGV receiving a load from a carrier AGV, in accordance with embodiments of the present disclosure. Although the method 200 can be adapted for use with any automatic load transfer between a pair of similar or different AGVs, the steps of the method 200 are applicable to a receiver AGV that is configured to initiate a load transfer process, act as the dynamic AGV during the handshake, and pick up the load off of the stationary carrier AGV. In an example of the method 200, the carrier AGV is the unit load type for transporting the load at a relatively high-speed, and the receiver AGV is a forklift type capable of picking up the load from a carrier AGV (e.g., a flat deck portion) and delivering the load to a transport container (e.g., truck trailer, etc.). In some embodiments, the receiver AGV is a forklift type capable of carrying a pallet couple (two adjacent pallets in tandem) simultaneously. In this regard, the receiver AGV can include fork configurations capable of manipulating the pallet couple (e.g., a quad fork configuration) to deliver the pallet couple to the transport container or to multiple high-speed transport AGVs. These receiver AGVs for pallet couples can carry the couple in any relative orientation, for example, for pallets having a rectangular shape, the pallet couple can be aligned with the major lengths adjacent to each other (see FIGURE 7A), with the minor lengths adjacent to each other (see FIGURE 7C), or in opposite orientations (see FIGURE 7B). Other AGV configurations are also within the scope of the method 200.

From start block 202 in FIGURE 2A, the method 200 begins the process of automatically transferring a load between a pair of AGVs. At block 204, an AGV fleet control system transmits load transfer information and a node location of a road system in a warehouse facility to a carrier AGV and a receiver AGV. The node location can be a standard load transfer location at the loading area or a logistic-driven location (e.g., a center point between the AGVs, a meeting point at full speed of both AGVs, etc.). Next, in block 206, the carrier AGV and the receiver AGV travel to the node location for the load transfer, and reach a position at or within a maximum handshake distance between the AGV pair.

Next, in block 208, the receiver AGV receives a signal from the fleet control system to initiate the load transfer process from the carrier AGV. Proceeding to block 210, a handshake is initiated between the AGV pair, which causes the carrier AGV to become stationary and block further task requests from the fleet control system during the handshake process. The blocking of further task requests to the stationary AGV (in this example, the carrier AGV) enforces safety by avoiding inadvertent movement of the stationary AGV with respect to the dynamic AGV, which could result in impact, injury, and/or property damage. After handshake initiation, in block 212, the receiver AGV receives information related to the presence of a load on the carrier AGV to ensure it is loaded. In this regard, the receiver AGV can use a sensor to ensure the carrier AGV is loaded before proceeding. In decision block 214, the receiver AGV determines whether the carrier AGV is loaded. If the carrier AGV is unloaded, in block 216, information related to the unexpected unloaded carrier AGV is sent to the fleet control system for further processing, and the method 200 is terminated in block 228.

Returning to a determination that the carrier AGV is loaded, in block 220, the carrier AGV and receiver AGV disable their respective bumper fields at least in the direction of the other AGV, creating the enlarged bumper field. The disabling of the bumper fields permits the AGVs to move within a range otherwise impermissible based on safety requirements. The range is required for the transfer process. As shown in FIGURE 3B, the enlarged bumper field can be a combination of the bumper field of the carrier and receiver AGVs, and may include some overlapping zones. Progressing to block 222, the receiver AGV raises its receiving portion (e.g., pallet forks) above the carrier AGV load receiving portion (e.g., a flat deck portion) and moves toward the carrier AGV to the load transfer position. In some embodiments, the movement of the receiver AGV after the handshake initiation can be slower than the standard travel speed of the receiver AGV, such that the control of the receiver AGV is enhanced in the close proximity to the carrier AGV. Additionally, the slower engagement speed can enhance the braking ability of the receiver AGV if an obstacle is detected in the enlarged bumper field. As the receiver AGV approaches the transfer position, the AGV can further slow its travel speed (e.g., to a creep speed) for even better stopping accuracy.

Turning to FIGURE 2B and continuing the method 100, as the receiver AGV moves toward the carrier AGV, in decision block 226, the AGV pair monitors obstacles entering the enlarged bumper field. If an obstacle is detected, in block 228, the method 200 is paused until the enlarged bumper field is clear of obstacles and operation resumes in block 230. If the enlarged bumper field remains clear of obstacles during the motion of the receiver AGV into the load transfer position, in block 232, the receiver AGV picks up the load from the carrier AGV. Next, in decision block 234, the receiver AGV determines whether the load has been received successfully. If the load has not been received successfully, the method 200 is paused until the receiver AGV is loaded and operation resumes in block 238.

Next, in block 240, the receiver AGV confirms the successful load transfer to the fleet control system, in block 242, the loaded receiver AGV travels away from the carrier AGV, e.g., reversing at the creep or engagement travel speeds. Next, the handshake is terminated in block 244 once the receiver AGV is clear of the unloaded carrier AGV. After termination of the handshake, in block 246, the receiver AGV travels with the transferred load to the load destination (e.g., a loading area on a vehicle container), and the method 200 ends. Although the method 200 is shown with process steps in one order as an illustrated embodiment, some of the process steps can be performed in a different order, for example, the step of block 222 can be performed prior to the step of block 210, or at any stage during the steps therebetween.

FIGURES 3A-3C are schematic views of a system 300 suitable for automatic load transfer between a pair of AGVs, e.g., implementing the method 100, in accordance with embodiments of the present disclosure. The system 300 includes a carrier AGV 310 having a carrier handshake system 314 and carrying a load L, and a receiver AGV 330 having a receiver handshake system 334 and configured to receive the load L from the carrier AGV 310. The position of the AGVs 310 and 330 in FIGURE 3A can be related to a position between the handshake initiation position of block 110 and the load transfer position of block 132 of the method 100.

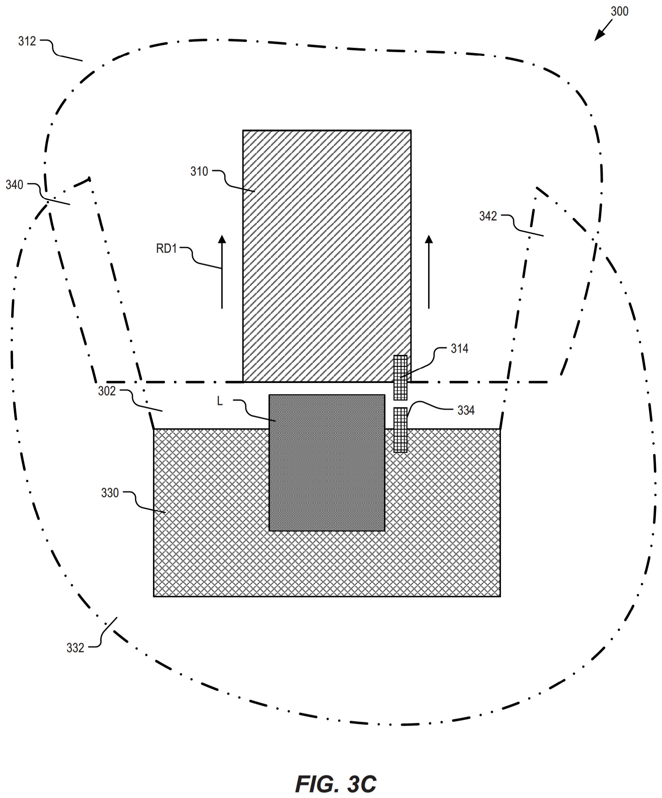

The system 300 is shown after the carrier AGV 310 and the receiver AGV 330 have disabled their respective bumper fields in the direction of the other AGV. In this regard, the carrier AGV 310 has a partial carrier bumper field 312 (denoted by the dot-dash broken line) and the receiver AGV 330 has a partial receiver bumper field 332 (denoted by the dot-dot-dash broken line). Prior to disabling, the bumper fields of the respective AGVs can be any suitable shape for safe obstacle detection, and in the illustrated embodiment, can continue the general outline of the rounded outer portion of the fields 312 and 332. During the method 100, once the handshake is initiated by the systems 314 and 334 of the respective AGVs, and portions of the fields 312 and 332 have been disabled, the fields 312 and 332 together form an enlarged bumper field around both of the AGVs 310 and 330. The enlarged bumper field can have overlapping areas 340 and 342, which are dynamic as the carrier AGV 310 moves toward the load transfer position in the handshake initiated direction HD1. FIGURE 3B shows the load transfer in a load transfer direction LTD1 from the carrier AGV 310 to the receiver AGV 330, as in block 132. Next, in FIGURE 3C, the carrier AGV 310 can travel in a reverse direction RD1 as in block 142, and the handshake between the systems 314 and 334 can be terminated, completing the load transfer.

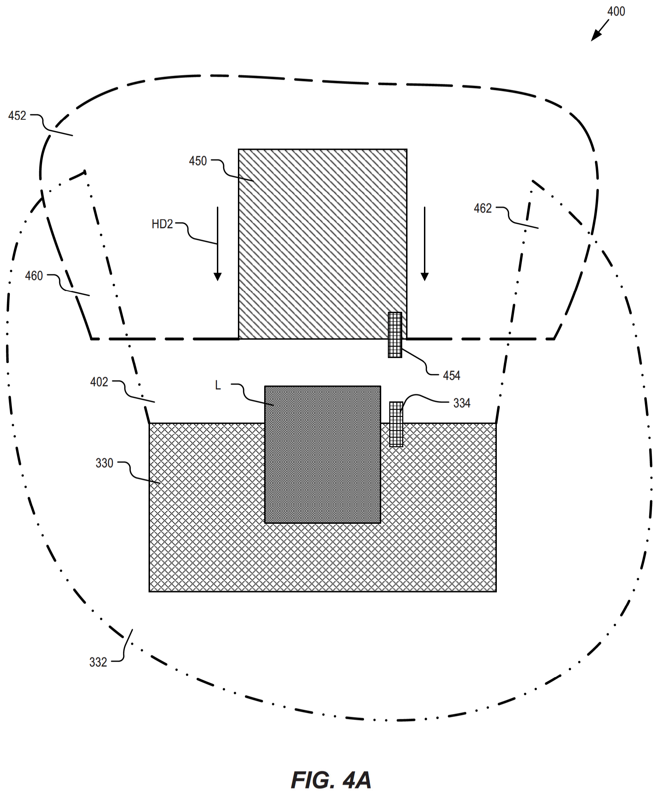

FIGURES 4A-4C are schematic views of a system 400 suitable for automatic load transfer between a pair of AGVs, e.g., for implementing the method 200, in accordance with embodiments of the present disclosure. The system 400 includes the carrier AGV 330 (the loaded receiver AGV 330 from FIGURES 3A-3C) having a carrier handshake system 334 and carrying a load L, and a receiver AGV 450 having a receiver handshake system 454 and configured to receive the load L from the carrier AGV 330. The position of the AGVs 330 and 450 in FIGURE 4A can be related to a position between the handshake initiation position of block 210 and the load transfer position of block 232 of the method 200.

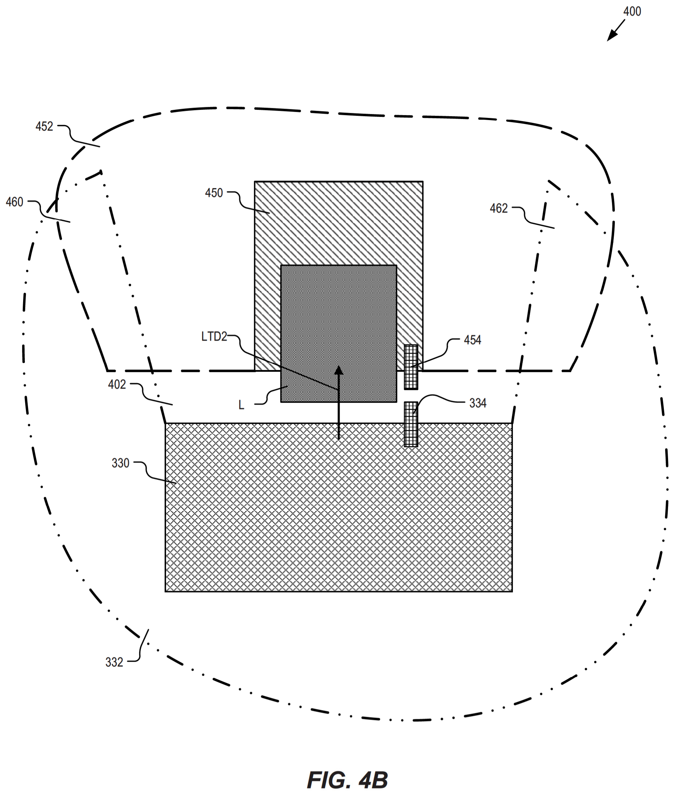

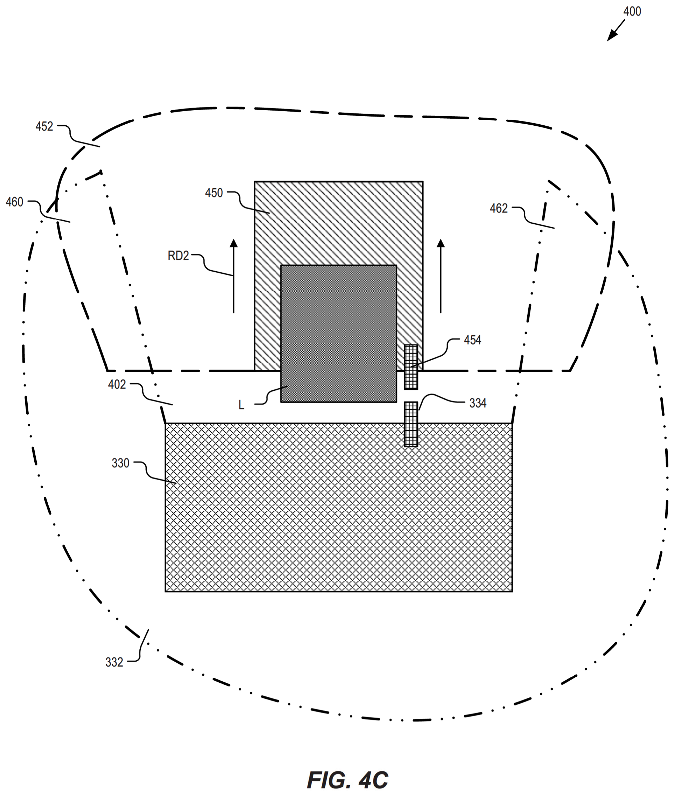

The system 400 is shown after the carrier AGV 330 and the receiver AGV 450 have disabled their respective bumper fields in the direction of the other AGV. In this regard, the carrier AGV 330 has a partial carrier bumper field 332 (denoted by the dot-dot-dash broken line) and the receiver AGV 450 has a partial receiver bumper field 452 (denoted by the short-long-dash broken line). Prior to disabling, the bumper fields of the respective AGVs can be any suitable shape for safe obstacle detection, and in the illustrated embodiment, can continue the general outline of the rounded outer portion of the fields 332 and 452. During the method 200, once the handshake is initiated by the systems 334 and 454 of the respective AGVs, and portions of the fields 332 and 452 have been disabled, the fields 332 and 452 together form an enlarged bumper field around both of the AGVs 330 and 450. The enlarged bumper field can have overlapping areas 460 and 462, which are dynamic as the receiver AGV 450 moves toward the load transfer position in the handshake initiated direction HD2. FIGURE 4B shows the load transfer in a load transfer direction LTD2 from the carrier AGV 330 to the receiver AGV 430, as in block 232. Next, in FIGURE 4C, the receiver AGV 450 can travel in a reverse direction RD2 as in block 242, and the handshake between the systems 334 and 454 can be terminated, completing the load transfer.

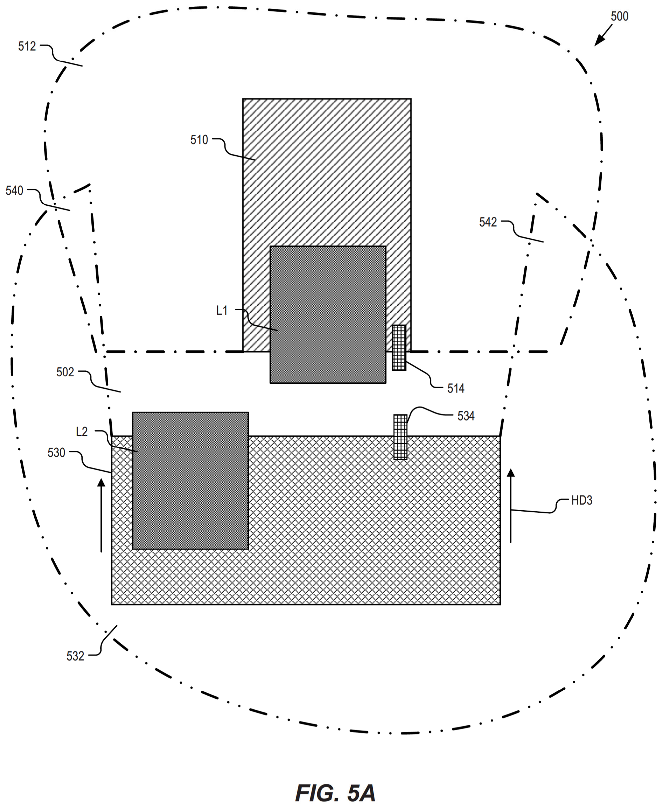

FIGURES 5A-5C are schematic views of a system 500 suitable for automatic load transfer between a pair of AGVs, e.g., implementing the method 200, in accordance with embodiments of the present disclosure. The system 500 includes a carrier AGV 510 having a carrier handshake system 514 and carrying a first load L1, and a receiver AGV 530 having a receiver handshake system 534 and carrying a second load L2, which together with the first load L1 will form a load couple (e.g., a pallet couple) once loaded together on the receiver AGV 530. Although the receiver AGV 530 is shown as partially loaded, the system 500 is also suitable for use with a fully unloaded receiver AGV 530 (i.e., before the second load L2 is loaded). The receiver AGV 530 is configured to receive the first load L1 from the carrier AGV 510 in an open load receiving position adjacent to the second load L2. The position of the AGVs 510 and 530 in FIGURE 5A can be related to a position between the handshake initiation position of block 110 and the load transfer position of block 132 of the method 100.

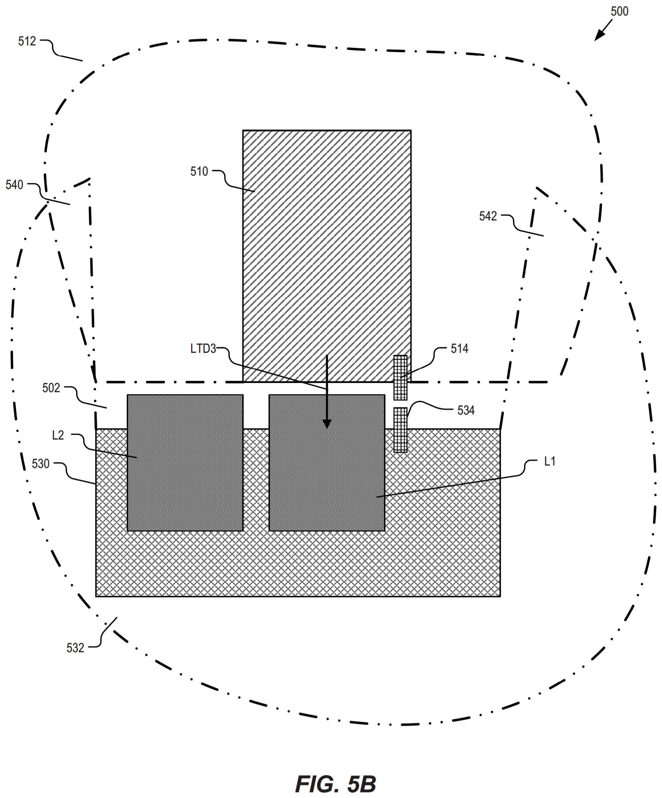

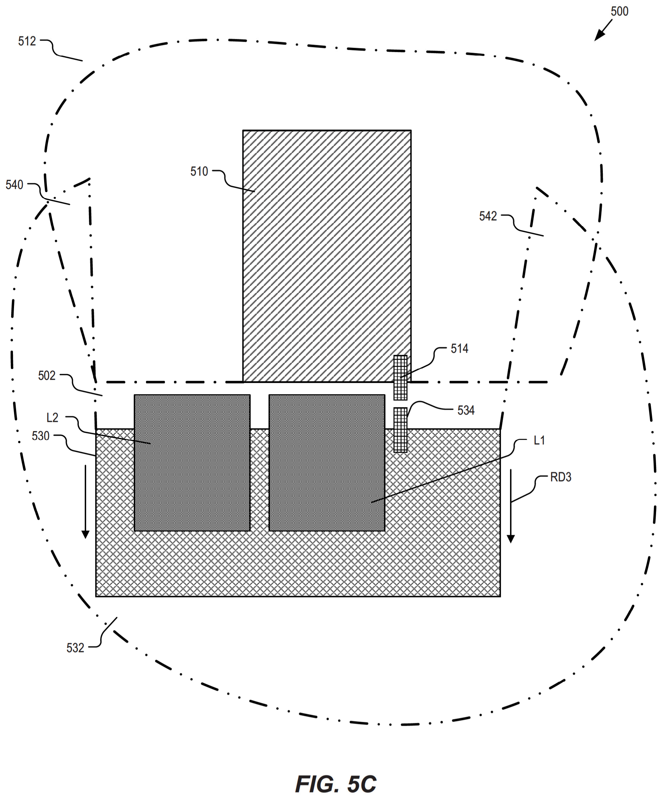

The system 500 is shown after the carrier AGV 510 and the receiver AGV 530 have disabled their respective bumper fields in the direction of the other AGV. In this regard, the carrier AGV 510 has a partial carrier bumper field 512 (denoted by the dot-dash broken line) and the receiver AGV 530 has a partial receiver bumper field 532 (denoted by the dot-dot-dash broken line). Prior to disabling, the bumper fields of the respective AGVs can be any suitable shape for safe obstacle detection, and in the illustrated embodiment, can continue the general outline of the rounded outer portion of the fields 512 and 532. During the method 200, once the handshake is initiated by the systems 514 and 534 of the respective AGVs, and portions of the fields 512 and 532 have been disabled, the fields 512 and 532 together form an enlarged bumper field around both of the AGVs 510 and 530. The enlarged bumper field can have overlapping areas 540 and 542, which are dynamic as the receiver AGV 530 moves toward the load transfer position in the handshake initiated direction HD3. FIGURE 5B shows the load transfer of the first load L1 in a load transfer direction LTD3 from the carrier AGV 510 to the receiver AGV 530, as in block 232. Next, in FIGURE 5C, the receiver AGV 530 can travel in a reverse direction RD3 as in block 242, and the handshake between the systems 514 and 534 can be terminated, completing the load transfer. Although the first and second loads L1 and L2 are shown oriented with their respective major lengths adjacent to each other (such as shown in FIGURE 7A), the carrier AGV 510 can transfer the first load L1 to the receiver AGV 530 with the minor lengths of the first and second loads L1 and L2 adjacent to each other (such as shown in FIGURE 7C), or with the load couple in opposite orientations (such as shown in FIGURE 7B).

Although FIGURES 5A-5C show the receiver AGV 530 moving toward the carrier AGV 510 in the direction HD3 to initiate the load transfer, in other embodiments, the receiver AGV 530 can remain stationary and the carrier AGV 510 can move toward the receiver AGV 530 to initiate the load transfer. In further embodiments, the receiver AGV 530 can be fully empty and the first and second loads L1 and L2 can be loaded onto the receiver AGV 530 by two carrier AGVs simultaneously, or by two carrier AGVs in series, with the second load L2 being loaded by a second carrier AGV prior to the configuration shown in FIGURE 5A (such as in FIGURES 3A-3C), and then the first load L1 being loaded by a first carrier AGV as shown in FIGURES 5A-5C. In this regard, the handshake process described above can be initiated and processed between the three AGVs similar to the process with two AGVs described herein.

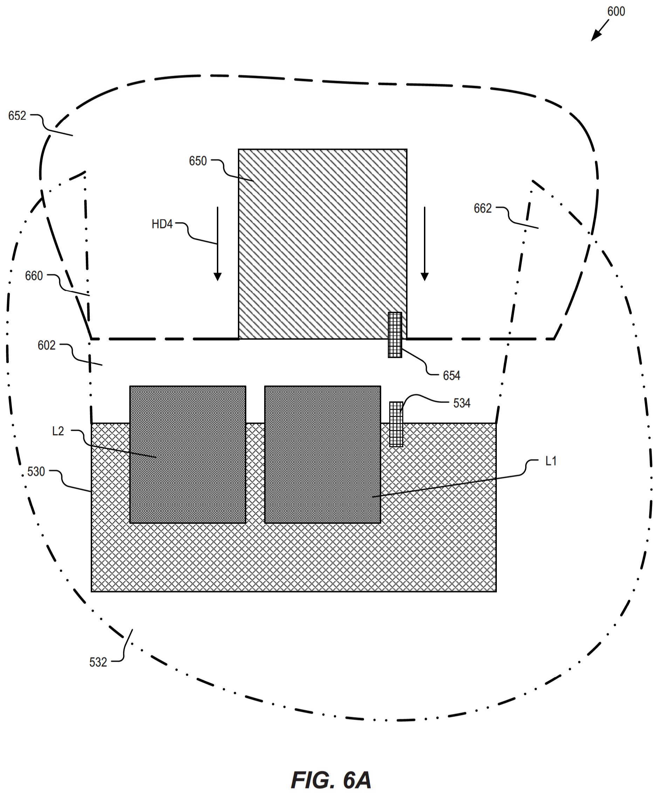

FIGURES 6A-6C are schematic views of a system 600 suitable for automatic load transfer between a pair of AGVs, e.g., for implementing the method 200, in accordance with embodiments of the present disclosure. The system 600 includes the carrier AGV 530 (the loaded receiver AGV 530 from FIGURES 5A-5C) having a carrier handshake system 534 and carrying a first and second loads L1 and L2, and a receiver AGV 650 having a receiver handshake system 654 and configured to receive the first load L1 from the carrier AGV 530. The position of the AGVs 530 and 650 in FIGURE 6A can be related to a position between the handshake initiation position of block 210 and the load transfer position of block 232 of the method 200.

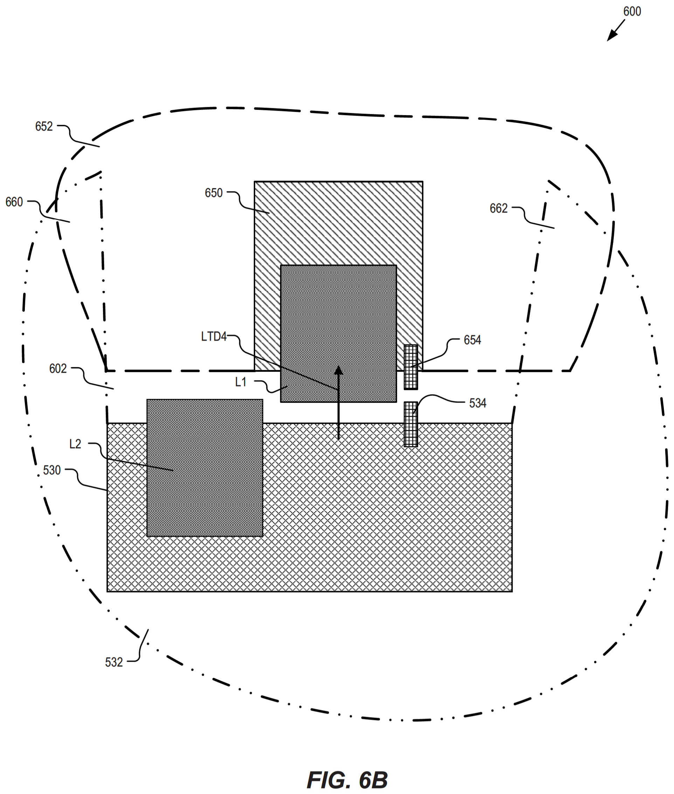

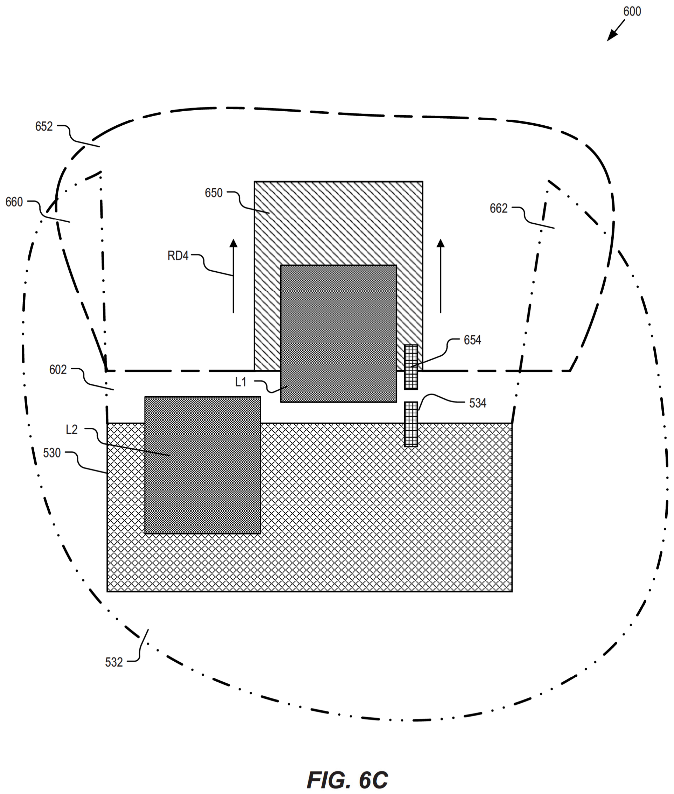

The system 600 is shown after the carrier AGV 530 and the receiver AGV 650 have disabled their respective bumper fields in the direction of the other AGV. In this regard, the carrier AGV 530 has a partial carrier bumper field 532 (denoted by the dot-dot-dash broken line) and the receiver AGV 650 has a partial receiver bumper field 652 (denoted by the short-long-dash broken line). Prior to disabling, the bumper fields of the respective AGVs can be any suitable shape for safe obstacle detection, and in the illustrated embodiment, can continue the general outline of the rounded outer portion of the fields 532 and 652. During the method 200, once the handshake is initiated by the systems 534 and 654 of the respective AGVs, and portions of the fields 532 and 652 have been disabled, the fields 532 and 652 together form an enlarged bumper field around both of the AGVs 530 and 650. The enlarged bumper field can have overlapping areas 660 and 662, which are dynamic as the receiver AGV 650 moves toward the load transfer position in the handshake initiated direction HD4. FIGURE 6B shows the load transfer in a load transfer direction LTD4 from the carrier AGV 530 to the receiver AGV 630, as in block 232. Next, in FIGURE 6C, the receiver AGV 650 can travel in a reverse direction RD4 as in block 242, and the handshake between the systems 534 and 654 can be terminated, completing the load transfer.

Although FIGURES 6A-6C show the receiver AGV 650 moving toward the carrier AGV 530 in the direction HD4 to initiate the load transfer, in other embodiments, the receiver AGV 650 can remain stationary and the carrier AGV 530 can move toward the receiver AGV 650 to initiate the load transfer. In further embodiments, the first and second loads L1 and L2 can be unloaded from the carrier AGV 530 by two receiver AGVs simultaneously, or by two receiver AGVs in series, with the first load L1 being unloaded by a first receiver AGV as shown in FIGURES 6A-6C, and then the second load L2 being unloaded by a second receiver AGV after the configuration shown in FIGURE 6C (such as in FIGURES 4A-4C). In this regard, the handshake process described above can be initiated and processed between the three AGVs similar to the process with two AGVs described herein.

FIGURES 7A-7C are schematic views of systems for implementing the methods 100 and 200, where a receiver AGV 730 is configured to carry a pallet couple. The receiver AGV 730 can be similar to the receiver AGV 530 of FIGURES 5A-5C having a receiver handshake system 734 and carrying first and second loads L1 and L2, which together form a load couple (e.g., a pallet couple) once loaded together on the receiver AGV 730. In FIGURE 7A, the first and second loads L1 and L2 are shown oriented with their respective major lengths adjacent to each other, and are configured to be loaded into the transport container in this orientation. In FIGURE 7B, the first and second loads L1 and L2 are shown oriented with their respective major lengths rotated 90° from one another, and are configured to be loaded into the transport container in this orientation. In FIGURE 7C, the first and second loads L1 and L2 are shown oriented with their respective minor lengths adjacent to each other, and are configured to be loaded into the transport container in this orientation. Any other pallet couple orientation is also within the scope of the present disclosure.

In the foregoing description, specific details are set forth to provide a thorough understanding of exemplary embodiments of the present disclosure. It will be apparent to one skilled in the art, however, that the embodiments disclosed herein may be practiced without embodying all of the specific details. In some instances, well-known process steps have not been described in detail in order not to unnecessarily obscure various aspects of the present disclosure. Further, it will be appreciated that embodiments of the present disclosure may employ any combination of features described herein.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about," "approximately," "near," etc., mean plus or minus 10% of the stated value. For the purposes of the present disclosure, the phrase "at least one of A and B" is equivalent to "A and/or B" or vice versa, namely "A" alone, "B" alone or "A and B." Similarly, the phrase "at least one of A, B, and C," for example, means (A), (B), (C), (A and B), (A and C), (B and C), or (A, B, and C), including all further possible permutations when greater than three elements are listed.

It should be noted that for purposes of this disclosure, terminology such as "upper," "lower," "vertical," "horizontal," "fore," "aft," "inner," "outer," "front," "rear," etc., should be construed as descriptive and not limiting the scope of the claimed subject matter. Further, the use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Throughout this specification, terms of art may be used. These terms are to take on their ordinary meaning in the art from which they come, unless specifically defined herein or the context of their use would clearly suggest otherwise.

The principles, representative embodiments, and modes of operation of the present disclosure have been described in the foregoing description. However, aspects of the present disclosure, which are intended to be protected, are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure as claimed.

## Claims

1. A method for automatic transfer of a load between a first automated guided vehicle (AGV) and a second AGV, the method comprising:
receiving, by the first AGV, a signal to initiate a load transfer process from an AGV fleet control system;
initiating a handshake between the first AGV and the second AGV, wherein the handshake causes the second AGV to become stationary and block receipt of further task requests from the AGV fleet control system;
disabling a portion of a first bumper field of the first AGV in the direction of the stationary second AGV;
disabling a portion of a second bumper field of the second AGV in the direction of a path of travel of the first AGV;
moving the first AGV toward the second AGV into a load transfer position, in which the first AGV is positioned within the disabled portion of the second bumper field and the second AGV is positioned within the disabled portion of the first bumper field;
transferring the load between the first AGV to the second AGV;
moving the first AGV away from the second AGV; and
terminating the handshake,
wherein, during movement of the first AGV into the load transfer position, the first bumper field and the second bumper field together form an enlarged bumper field surrounding at least a majority of a combined perimeter the first AGV and the second AGV.

2. The method of Claim 1, wherein:
the first AGV is a receiver AGV that is initially not carrying the load;
the second AGV is a carrier AGV that is initially carrying the load;
transferring the load between the first AGV and the second AGV comprises transferring the load from the second AGV to the first AGV; and
wherein method further comprises delivering, by the first AGV, the load to a load destination away from the transfer node location.

3. The method of Claim 1 or 2, wherein:
the first AGV is a carrier AGV that is initially carrying the load;
the second AGV is a receiver AGV that is initially not carrying the load;
transferring the load between the first AGV and the second AGV comprises transferring the load from the first AGV to the second AGV; and
wherein method further comprises delivering, by the second AGV, the load to a load destination away from the transfer node location.

4. The method of any of Claims 1-3, wherein:
the load is a first load;
the first AGV is a carrier AGV that is initially carrying the first load;
the second AGV is a receiver AGV that is initially carrying a second load;
transferring the first load between the first AGV and the second AGV comprises transferring the first load from the first AGV to the second AGV; and
wherein method further comprises delivering, by the second AGV, the first and second loads in a load couple to a load destination away from the transfer node location.

5. The method of Claim 4, wherein the first and second loads are rectangular shaped, and wherein after transferring the first load from the first AGV to the second AGV, the load couple is oriented on the second AGV, with:
the major lengths of the first and second loads adjacent to each other;
the minor lengths of the first and second loads adjacent to each other; or
the minor length of the first load adjacent to the major length of the second load.

6. The method of any of Claims 1-5, wherein, prior to the step of transferring the load, the method further comprises:
receiving, by one of the first or second AGVs, information related to the presence of the load on the other of the first or second AGVs; if a load is not present,
transmitting by one of the first or second AGVs information of the unloaded other of the first or second AGVs to the AGV fleet control system; and
terminating the automatic load transfer operation.

7. The method of any of Claims 1-6, wherein, prior to the step of transferring the load, the method further comprises raising, by the first AGV, a load transfer system to align with a carrier load platform of the second AGVs.

8. The method of any of Claims 1-7, wherein, during movement of the first AGV into the load transfer position, if an obstacle is detected by any portion of the enlarged bumper field, the first AGV stops moving until the enlarged bumper field is clear of obstacles.

9. The method of any of Claims 1-8, wherein prior to terminating the handshake, the method further comprises:
enabling the disabled portion of the first bumper field; and
enabling the disabled portion of a second bumper field.

10. The method of any of Claims 1-9, wherein, after the step of transferring the load, the method further comprises:
verifying that the load has been received by one of the first or second AGVs; and
transmitting, by one of the first or second AGVs, a signal that the load transfer is completed to the AGV fleet control system.

11. The method of any of Claims 1-10, wherein moving the first AGV away from the second AGV after the load transfer comprises moving the first AGV back to the position within the maximum handshake distance from the second AGV prior to terminating the handshake.

12. The method of any of Claims 1-11, wherein moving the first AGV toward the second AGV into the load transfer position includes moving the first AGV at an engagement speed that is slower than a standard operational speed of the first AGV.

13. The method of Claim 12, wherein, while traveling at the engagement speed and prior to arriving at the load transfer position, the method further comprises moving the first AGV at a creep speed that is slower than the engagement speed.

14. The method of any of Claims 1-13, wherein initiating the handshake between the first AGV and the second AGV includes:
communicating handshake information, with a transmitter of a handshake system of the first AGV, to a receiver of a handshake system of the second AGV; and
communicating handshake information, with a transmitter of the handshake system of the second AGV, to a receiver of the handshake system of the first AGV.

15. The method of any of Claims 1-14, wherein the first AGV is a forklift type AGV, and wherein the second AGV is a unit load type AGV.
